# EUROPÄISCHE PATENTANMELDUNG

(11) **EP 2 034 327 A1**
(43) Veröffentlichungstag der Anmeldung: **11.03.2009**
(21) Anmeldenummer: 08015563.3
(22) Anmeldetag: 03.09.2008
(51) Int. Cl.: G01S 1/00

(54) **Regionales Navigationssatellitenergänzungssystem**

(30) Priorität: 04.09.2007 DE 102007041773
(71) Anmelder: Astrium GmbH, 81663 München (DE)
(72) Erfinder: Trautenberg, Hans L., Dr., 85521 Ottobrunn (DE); Weber, Thomas, Dr., 82064 Strasslach-Dingharting (DE)

(57) **Zusammenfassung**

Die Erfindung betrifft eine Vorrichtung eines Ergänzungsnavigationssatelliten umfassend eine Einrichtung zur Erzeugung von Navigationssignalen, wobei die Signalstärke der Navigationssignale so bemessen ist, dass der Empfang von Signalen anderer Satellitennavigationssysteme immer noch möglich ist.

## Beschreibung

Die Erfindung betrifft ein regionales Navigationssatellitenergänzungssystem.

Ein Navigationssystem muss nicht nur eine Positionierung der Benutzer mit der notwendigen Genauigkeit, Kontinuität und Verfügbarkeit ermöglichen, sondern auch die für die Navigation notwendige sonstige Information bereitstellen.

Die Bereitstellung der notwendigen Information verfolgt heute in der Landfahrzeugenavigation über Kartenmaterial auf Papier und anderen Speichermedien sowie über Verkehrsfunknachrichten, die auch in digitaler Form verbreiten werden.

Die in den Navigationssystemen verwendeten Straßennetzkarten sind meist fest und werden nicht durch regelmäßige automatische Updates ohne Benutzerinteraktion auf dem laufenden gehalten. Die Information über augenblickliche oder zukünftige Verkehrsbehinderungen ist, wenn überhaupt, nur lokal oder regional verfügbar, obgleich für die Planung von längeren Fahrten auch überregionale Information von Bedeutung ist. Es findet keine selektive Umleitungsempfehlung statt, die berücksichtigt dass durch Umleitungsempfehlungen neue Verkehrsbehinderungen entstehen können.

Es ist eine Aufgabe der Erfindung eine Vorrichtung und ein Verfahren zu beschreiben, welche es ermöglichen Verkehrsbehinderungen zu umgehen.

Diese Aufgabe wird gelöst durch eine Vorrichtung nach Anspruch 1 und eine Verfahren nach Anspruch 7. Weitere vorteilhafte Ausgestaltungen der Erfindung finden sich in den Unteransprüchen.

Ein Vorteil der Erfindung ist, dass die Infrastruktur Straße deutlich effektiver genutzt wird, da Verkehrsbehinderungen umgangen werden können.

Ein weiterer Vorteil der Erfindung ist, dass der Aufwand, den der Benutzer treiben muss, um aktuelle Planungsunterlagen für seine Fahrten zu haben, deutlich reduziert.

Die Navigationssatelliten des Navigationssatellitenergänzungssystem, die sich über einem Gebiet, in dem ein Dienst bereitgestellt werden soll, befinden sich nahe am Zenit und senden ein relativ starkes Navigationssignal in das Dienstgebiet aus.

Diese Satelliten können zum Beispiel auf geneigten erdsynchronen Bahnen, auf erdsynchronen Bahnen in oder nahe der Äquatorebene, oder auch auf so genannten Molniya-Bahnen fliegen.

Typischerweise sind diese Satelliten dann mit einer (hoch-) gerichteten Antenne steuerbaren ausgerüstet, um mit möglichst geringem Energieaufwand eine möglichst hohen Signalstärke im Dienstgebiet zu erreichen, wobei die Signalstärke so bemessen ist, dass die Signale anderer Satellitennavigationssystem immer noch empfangen werden können. Dies wird unter anderem durch eine geeignete Wahl der Kodierung der Signale erreicht.

Die Signale übertragen mit einer Datenrate, die deutlich über der Datenrate des kommerziellen Dienstes von Galileo ist, navigationsrelevante Information. Dies Information beinhaltet unter anderem augenblickliche und erwartete Verkehrsbehinderungen im Dienstgebiet, Empfehlungen wie bestimme Benutzergruppen mit verschiedenen Fahrtrichtungen und Fahrtzielen (die regional zusammengefasst sein können) diese Verkehrsbehinderungen umfahren sollen, Veränderungen des Straßennetzes im Dienstgebiet und auch erwartete Verkehrsbehinderungen durch Umwelteinflüsse umfassen, wobei zeitlich kurz zurückliegende Veränderungen relativ häufig und zeitlich länger zurückliegende Veränderungen relativ selten wiederholt werden; dabei kann eine seltene Wiederholung auch überhaupt keine Wiederholung sein. Die Erfindung offenbart auch beliebige Kombinationen der oben genannten navigationsrelevanten Informationen.

Gemäß einer weiteren Ausführungsform beschreibt die Erfindung ein Verfahren zur Modellierung der Signalausbreitung eines Navigationssignals. Dieses Verfahren umfasst einen Schritt zur Bemessung der Signalstärke des Navigationssignals so, dass der Empfang von Signalen anderer Satellitennavigationssysteme immer noch möglich ist.

Die im Zusammenhang mit den Ausführungsformen der Vorrichtung der Erfindung angegebenen Merkmale sind auch für das Verfahren offenbart.

## Patentansprüche

1. Vorrichtung eines Ergänzungsnavigationssatelliten umfassend eine Einrichtung zur Erzeugung von Navigationssignalen, wobei die Signalstärke der Navigationssignale so bemessen ist, dass der Empfang von Signalen anderer Satellitennavigationssysteme immer noch möglich ist.

2. Vorrichtung nach Anspruch 1, wobei die Signale navigationsrelevante Informationen mit einer Datenrate übertragen werden, die deutlich über der Datenrate des kommerziellen Dienstes von Galileo ist.

3. Vorrichtung nach Anspruch 1 oder 2 wobei die Datenrate so bemessen ist, dass mit der zur Verfügung stehenden Leistung am Satelliten und der möglichen direktiven Antenne am Satelliten ein Maximaler Datendurchsatz unter den gegeben Umwelteinflüssen und der erlaubten Fehlerrate erreicht wird.

4. Vorrichtung nach Anspruch 2 oder 3, wobei die navigationsrelevante Informationen augenblickliche und erwartete Verkehrsbehinderungen in einem Dienstgebiet, Empfehlungen wie bestimme Benutzergruppen mit verscheiden Fahrtrichtungen und Fahrtzeilen (die regional zusammengefasst sein können) diese Verkehrsbehinderungen umfahren sollen, Veränderungen des Straßennetzes im Dienstgebiet und erwartete Verkehrsbehinderungen durch Umwelteinflüsse umfassen.

5. Vorrichtung nach Anspruch 4, wobei zeitlich kurz zurückliegende Veränderungen relativ häufig und zeitlich länger zurückliegende Veränderungen relativ selten wiederholt werden.

6. Vorrichtung nach Anspruch 5, wobei eine seltene Wiederholung auch überhaupt keine Wiederholung sein kann.

7. Verfahren zur Modellierung der Signalausbreitung eines Navigationssignals umfassend einen Schritt zur Bemessung der Signalstärke des Navigationssignals so, dass der Empfang von Signalen anderer Satellitennavigationssysteme immer noch möglich ist.
